(19) Europäisches Patentamt
European Patent Office
Office européen des brevets

(11) EP 0 614 784 B1

# (12) EUROPEAN PATENT SPECIFICATION

(45) Date of publication and mention of the grant of the patent:
**21.05.1997 Bulletin 1997/21**

(51) Int. Cl.[6]: **B60R 1/08**

(21) Application number: **94103477.9**

(22) Date of filing: **08.03.1994**

## (54) Anti-glare rearview mirror system

Blendfreies Rückspiegel-System

Système de rétroviseur anti-éblouissant

(84) Designated Contracting States:
**DE FR GB IT**

(30) Priority: **09.03.1993 JP 15587/93**

(43) Date of publication of application:
**14.09.1994 Bulletin 1994/37**

(73) Proprietor: **MURAKAMI KAIMEIDO CO., LTD**
**Shizuoka-Ken, 422 (JP)**

(72) Inventors:
- **Kobayashi, Masaki**
  **Fujieda-Shi, Shizuoka 426 (JP)**
- **Hattori, Michiaki**
  **Fujieda-Shi, Shizuoka 426 (JP)**

(74) Representative: **Riederer Freiherr von Paar zu Schönau, Anton et al**
**Lederer, Keller & Riederer,**
**Postfach 26 64**
**84010 Landshut (DE)**

(56) References cited:
**EP-A- 0 151 286**
**EP-A- 0 470 866**
**EP-A- 0 492 591**
**DE-A- 3 302 630**

- **DESIGN ENGINEERING, July 1991, LONDON,GB page 23, XP000218985 'LIQUID CRYSTAL TAKES THE SHINE OUT OF CAR MIRRORS'**
- **SAE 1987 TRANSACTIONS, vol.96, WARRENDALE, USA pages 2891 - 2899 NIALL R. LYNAM 'ELECTROCHROMIC AUTOMOTIVE DAY/NIGHT MIRRORS'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 614 784 B1

Printed by Rank Xerox (UK) Business Services
2.14.3/3.4

## Description

Background of the Invention

1. Field of the Art

This invention is related to a mirror system in which the automobile inside and outside rearview mirrors differ in reflectivity, and more particularly to an anti-glare rearview mirror system comprising an inside rearview mirror and an outside rearview mirror, wherein the inside rearview mirror is smaller in reflectivity than the outside rearview mirror. In this context, there is no difference whether there is one or are more inside rearview mirrors, and whether there is one or are more outside rearview mirrors.

2. Description of the Prior Art

During night drives, the drivers sometimes see the inside rearview mirror (hereinafter referred to as "IM") and the outside rearview mirror ("OM") of their cars embarassingly glare-reflecting the light from the following cars. To prevent this, anti-glare mirror systems have been invented.

These anti-glare mirror systems use electrochromic devices (hereinafter referred to as "ECD"), liquid crystal devices ("LCD"), etc., known e.g. from SAE Technical Paper Series, 870636, Electrochromic Automotive Day/Night Mirrors, by N. R. Lynam, Detroit 1987; and from EP-A-151286, respectively.

ECD has the property of taking a colored or bleached state by making a reversible reaction to the polarity of the current applied to it. Utilizing these properties, ECD is colored when it is desired to reduce the mirror reflectivity and bleached to increase the reflectivity.

LCD has the property of changing the orientation of its liquid crystal molecules according to the electric field applied to it. Upon the incidence of light into the liquid crystal with such molecular orientation, the light is polarized and makes complex refraction. Accordingly, the reflectivity can be controlled by controlling the orientation of the liquid crystal.

But LCD is more difficult to handle and more expensive than ECD, so that ECD is more frequently used for the anti-glare mirror systems.

There are liquid-phase ECD and solid-state ECD made from different materials. Comparing them, while the liquid-phase ECD can easier achieve a low reflectivity and can provide for a less expensive anti-glare mirror system, it has the disadvantages that it is slower in the coloring reaction velocity than solid-state ECD, chemically unstable, hard to be applied to the mirrors with a curvature, etc.

The basic construction of the liquid-phase ECD is that a liquid-phase EC layer is sandwiched between two sheets of transparent substrates, and the opposite side of the surface of one of the substrates contacting the liquid-phase EC layer is provided with an anti-reflection coating. The reason why the anti-reflecting coating and the liquid-phase EC layer are installed via a transparent substrate is that the anti-reflecting coating, if it comes into contact with the liquid-phase EC layer, will be bitten by the acid contained in the layer.

The problem is that the reflection of light in the rearview field can therefore occur by the anti-reflection coating and the transparent substrate provided with the coating, producing multiplex images in the rearview field which can impair the driver's capability of seeing. This inhibition of sight by the occurrence of multiplex images becomes remarkable if the light incidence angle in the rearview field differs much from its reflection angle, so it is difficult to apply the liquid-phase ECD to OM.

Meanwhile, installed at a position closer to the driver's seat, the IM glares more than the OM, hence the problem that if both IM and OM have the same reflectivity, the visibility in the rearview field becomes unbalanced.

In the OM and IM made of an ECD with the same members and used under the same operation conditions, the attempt to prevent the IM from glaring could reduce the reflectivity of OM, impairing the visibility of the rearview field, while the attempt to prevent the OM from glaring makes the prevention of IM from glaring insufficient. So the ECD has conventionally been only used for the IM of which glaring is greater than that of the OM, to secure better visibility of the rearview field.

However the problem therein is that even if the IM glaring can be prevented, the OM glaring cannot be eliminated. A technique trying to solve this problem is disclosed in the U.M. Journal No. 123836/1989, which prior art varies the operation conditions between the IM and OM made of the ECD with the same members. The arrangements are made so that the IM ECD can be colored earlier than the OM ECD to activate the mirror system into anti-glare conditions, and the IM ECD can be bleached earlier than the OM ECD to make the mirror system turn off the anti-glare conditions. However in this case, though the timing of coloring differs from that of bleaching, IM and OM will show the same reflectivity when the ECD has reached the saturation conditions a certain time after the start of coloring or bleaching, making the driver's sight unbalanced between the IM and OM.

Another prior art, described in EP-A-0470866, uses electro-optical devices which are applied to an inside rearview mirror and outside rearview mirrors of an automobile and a driving circuit which drives said electro-optical devices so

that the reflectance values thereof may be individually set with separate level setting means. When the mirror reflectivity is controlled by first input means in a certain range and a driver desires a reflectivity value out of the certain range, it is controlled by second and third input means. The reflectivity obtained by the second and third input means is automatically returned to the control by the first input means by operating the second and third input means again within a certain time or using a timer. However, no time sequence of the behaviors of the different mirrors is disclosed.

## Summary of the Invention

The object of this invention is then to provide an anti-glare mirror system in which the OM and IM differ from each other in reflectivity behavior when the anti-glare function operates. It is a particular object of the present device to prevent that the reflectivity of an exterior rearview mirror is extremely decreased and thereby the visibility of a driver is impaired because the degree of the glare received by the driver from the exterior rearview mirror is smaller than that received from an interior rearview mirror. For this, the mirror system according to this invention which is provided with an electro-optical device to change the reflectivity between IM and OM, and a drive means for driving said electro-optical device to make the reflectivity differ between IM and OM, thus adjusting the variation of driver's sight, is also provided with a timer circuit which sets up so that the timing to start the driving voltage supplied to IM is earlier than the timing to start the driving voltage supplied to OM, and so that the timing to end the driving voltage supplied to IM is later than the timing to end the driving voltage supplied to OM.

For the above purpose, the drive means is provided with: a sensing circuit which senses the ambient light and backward light and compares them with a standard value to judge whether the Im and OM reflectivity must be changed, a day/night switching gate circuit which judges if the judgment by said sensing circuit is temporary or not, and a driving circuit which drives the electro-optical device by the signal from said day/night switching gate circuit.

Preferably, the electro-optical device used in IM is a liquid-phase electrochromic mirror, the electro-optical device used in OM is a solid-state electrochromic mirror, and the driving circuit outputs the same driving voltage value to make the IM reflectivity smaller than the OM reflectivity.

It is further preferred that the driving circuit is also provided with a transforming circuit for changing the driving voltage supplied to IM and OM in order to set up the driving voltage value supplied to IM higher than the driving voltage value supplied to OM, so that the IM reflectivity can be smaller than the OM reflectivity.

Still further, the driving circuit should be provided with a sensing/controlling circuit of the terminal voltage which detects the terminal voltages of IM and OM and compares the control potential to adjust so that a fixed driving voltage value can be supplied to IM and OM.

As the electro-optical device, there are used an electro-chromic device, a liquid crystal device and two kinds of electro-optical devices selected from PLZT [(Pb,La)(Zr,Ti)$O_3$ ceramics substituted by La for a part of Pb in PZT, is superior to translucent ability and has an electro-optical effect to be applicable for an optical memory of display and an optical shutter or the like].

## Brief Description of Drawings

Further developments, advantages and features of the invention can be seen from the following description of preferred embodiments of the invention, described with reference to the annexed drawings wherein:

Fig. 1 shows a block chart of the anti-glare mirror system, used for explaining an embodiment 1.
Fig. 2 shows a block chart of the anti-glare mirror system, used for explaining an embodiment 2.
Fig.s 3A and 3B show sectional views of electro-optical devices to illustrate their basic constructions, in which Fig. 3A shows a liquid-phase ECD in section and Fig. 3B shows a solid-state ECD in section.
Fig. 4 shows a circuit diagram of a stabilizing power circuit used in Fig. 2.
Fig. 5 shows a circuit diagram of a sensing circuit used in Fig. 2.
Fig. 6 shows a circuit diagram of a driving circuit used in Fig. 2.
Fig. 7 shows the results of driving the anti-glare mirror system shown in Fig. 2.
Fig. 8 shows a circuit diagram of a driving circuit for the anti-glare mirror system used for explaining an embodiment 3.

## Description of Preferred Embodiments

[Embodiment 1]

The embodiment 1 is explained below referring to the drawings. Fig. 1 shows a block chart of the anti-glare mirror system which uses the same type of ECD for IM and OM and can set up individual driving voltages on them. The anti-glare mirror system comprises a drive means, OM and IM.

The drive means comprises OM 1, IM 2, a stabilizing power circuit 3, a sensing circuit 4, a day/night switching gate circuit 5 and a driving circuit 6.

The sensing circuit 4 consists of a backward light sensor circuit 8, an ambient light sensor circuit 9, a coloring/bleaching state deciding circuit 10, a day/night mode deciding circuit 11, a delay circuit 12 for delaying the start to color or bleach the OM (hereinafter referred to as "OM delay circuit"), a delay circuit 13 for delaying the start to color or bleach the IM ("IM delay circuit") and a day/night mode deciding delay circuit 14.

The day/night switching circuit 5 consists of a gate circuit 15 for controlling the operation of OM ("OM gate circuit") and a gate circuit 16 for controlling the operation of IM ("IM gate circuit").

The drive circuit 6 consists of a timer circuit 17 for driving OM ("OM drive timer circuit"), a timer circuit 18 for driving IM ("IM drive timer circuit"), a driving voltage controlling circuit 20 for controlling the driving voltage of OM ("OM drive voltage control circuit"), a driving voltage controlling circuit 21 for controlling the driving voltage of IM ("IM driving voltage control circuit") and terminal voltage sensing and controlling circuits 22 and 23.

The sensing circuit 4 detects the luminosity of backward light with the backward light sensor circuit 8, and the brightness around the car with the ambient light sensor circuit 9. The signal from the ambient light sensor circuit 9 is input to the day/night mode deciding circuit 11, where this signal is compared with a standard value to discriminate "the day mode" from "the night mode". The result of this discrimination or judgment is a day/night mode signal B which is input to the day/night mode deciding delay circuit 14.

When the car passes under a street light, the ambience of the car momentarily brightens. In this case, if the anti-glare mirror system is so sensitive as to react to the momentary ambient brightness, it could impair the safety of car operation. To prevent this, the day/night mode deciding delay circuit 14 is so arranged that the day/night mode signal B is only output when the signal from the day/night mode deciding circuit 11 persists for a fixed time period.

Namely, when the day/night mode deciding circuit 11 determines "the day mode" or "the night mode", unless this judgment persists for more than a fixed time period, the output from the day/night mode deciding delay circuit 14 does not change. Accordingly, even if the car passes under a street light and its ambience is temporarily brightened, OM 1 and IM 2 do not change their reflectivity.

Meanwhile, the signal from the backward light sensor circuit 8 and the signal from the ambient light sensor circuit 9 are input to the coloring/bleaching state deciding circuit 10, where these signals are compared with each other. By this comparison, it is judged whether the OM 1 and IM 2 should take "the colored state (anti-glare conditions)" or "bleached state (unactuated conditions)", and the coloring/bleaching state signal A is output accordingly.

This judgment is done in real-time to the changes of backward light. Let us imagine the scene where the following car flashes the headlight. In this case, the signal from the coloring/bleaching state deciding circuit 10 changes synchronously with the headlight flashing. So, if this signal is used it is as the control signal for OM 1 and IM 2, their reflectivities will change synchronously with the headlight flashing, which can impair the safety of car operation.

Therefore, the OM and IM delay circuits 12 and 13 are so arranged as to output the coloring or bleaching signal only when the signal from the coloring/bleaching state deciding circuit 10 persists for more than a fixed time period.

Generally speaking, the mirror glaring differs in nature between daytime and nighttime. The OM 1 and IM 2 must therefore be made "the colored state" or "the bleached state" according to "the daytime mode" or "the nighttime mode" of the car. This judgment is done by the coloring/bleaching switching gate circuit 5 which does a logical judgment on the coloring or bleaching signals from the OM or IM delay circuits 12 and 13, according to the signal from the day/night mode deciding delay circuit 14.

The result of the logical judgment from the coloring/bleaching switching gate circuit 5 is input to the OM and IM drive timer circuits 17 and 18, both of which output the control signal to the IM and OM driving voltage control circuits 21 and 20, respectively, in order to drive the OM 1 and the IM 2 for a fixed time period.

As mentioned above, the mirror glaring caused by the light from the headlight of the following car, etc. generally is most remarkable at the IM 2, and ECD has the characteristics to condense in color in proportion to the driving voltage value. Accordingly, if the IM 2 and OM 1 are driven under the same operation conditions, the driver's visibility of the rearview field would be differentiated between the IM and the OM. Thereagainst, he color density is adjusted by making the driving voltages different between IM 2 and OM 1, in order to adjust the difference of visibility in the rearview field between IM and OM.

For this purpose, the terminal voltage sensing and controlling circuits 22 and 23 are provided. To the input terminals of these circuits 22 and 23 are input a free-to-set standard voltage V1 and V2, respectively, and the voltages applied to IM 2 and OM 1. And these circuits 22 and 23 output their signals to the IM and OM driving voltage control circuits 21 and 20, respectively, so that these voltages may become equal to one another.

It is therefore possible to set up the IM and OM driving voltage values at different levels, thereby controlling the IM and OM reflectivities independently of each other.

[Embodiment 2]

The embodiment 2 will be explained below referring to the drawings. Fig. 2 shows a block chart of the anti-glare

mirror system according to the embodiment 2, in which the terminal voltage sensing and controlling circuits 22 and 23 used in the embodiment 1 are not provided. Therefore, the IM and OM driving voltage control circuits 21 and 20 output the same driving voltage value to ECD. But in this case, IM 2 is colored more thickly than OM 1, making the driver's visibility of the rearview field unbalanced between IM and OM. As mentioned previously, there are available two kinds of ECDs - the liquid-phase ECD using liquid-phase EC and the solid-state ECD using solid-state EC. When driven under the same operation conditions, the liquid-phase ECD tends to be colored more densely than the solid-state ECD. Namely, the liquid-phase ECD can keep the reflectivity lower than the solid-state ECD.

Utilizing this characteristic, the embodiment 2 applies a liquid-phase ECD to IM 2 and a solid-state ECD to OM 1 to improve the unbalanced visibility of the rearview field.

By the way, the same components as in the embodiment 1 will be given the same numbers to omit their explanation.

Fig. 3 shows a sectional view each of IM 2 and OM 1 to illustrate their principles and constructions; Fig. 3A shows the case where the liquid-phase ECD is applied to IM 2, and Fig. 3B the case where the solid-state ECD is applied to the OM 1.

As shown in Fig. 3A, the IM 2 has a pair of transparent substrates 40a and 40b provided whith transparent electrodes 41a and 41b, and a liquid-phase EC 42. The liquid-phase EC 42 is sandwiched between the transparent substrates 40a and 40b, with their sides having transparent electrodes 41a and 41b facing inwardly, spaced by a certain interval from each other by means of spacers 43 and fixed by adhesives 44. Number 45 denotes a reflecting layer and number 46 denotes the operator.

As the liquid-phase EC 42, such reducing EC as shown below

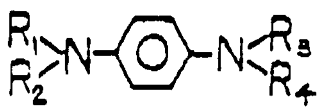 (R ; alkyl : $C_nH_{2n+1}$ , n=1, 2, 3 ···)

or such oxidating EC as shown below

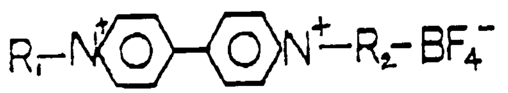 (R ; alkyl : $C_nH_{2n+1}$ , n=1, 2, 3 ···)

can be used by dissolving it in the solvent of propylene carbonate using tetra alkyl ammonium salt as the electrolyte.

Meanwhile, as shown in Fig. 3B, the OM 1 using the solid-state ECD comprises a transparent substrate 50 having first and second transparent electrodes 51 and 52, and a substrate 53 located opposite to the substrate 50, the two substrates being fixed by adhesives 54.

A first coloring layer EC 55, an electrolytic layer 56, a second coloring layer 57 and a second electrode 58 that is used as the reflective film too, are laminated between the transparent substrate 50 and its opposing substrate 53.

The first and the second transparent electrodes 51 and 52 provided on the transparent substrate 50 are electrically separated, and the second transparent electrode 52 is connected with the second electrode 58 at an area around the OM 1.

For the first coloring layer 55, the electrolytic layer 56, the second coloring layer 57 and the second electrode 58, there are used, for example, $Iro_3$ + $SnO_2$, $Ta_20_5$, $WO_3$, Al.

For the transparent substrates 40a, 40b and 50, glass or hard plastics, and for the transparent electrodes 41a, 41b, 51 and 52, ITO are used, etc.

Figs. 4 to 6 show circuit diagrams which illustrate the block chart in Fig. 2 more detailedly; Fig. 4 shows the stabilizing power circuit 3, Fig. 5 the sensing circuit 4 and the day/night mode switching gate circuit 5 and Fig. 6 a circuit diagram of the driving circuit 6.

The stabilizing circuit 3 in Fig. 4 stabilizes the power supplied from the car battery, etc. and supplies it to the antiglare mirror system. The circuit arrangement can be seen from the Figure, no additional description being necessary. The supply voltage is given from the lines $V_A$ and $V_B$, with the supply voltage value set lower in the line $V_B$ than in the line $V_A$. The set value is determined by a resistor R1 and a zener diode D4.

In Fig. 5, the backward light sensor circuit 8 has a backward light sensor 8a and a sensor circuit 8b, and the ambient light sensor circuit 9 has an ambient light sensor 9a and a sensor circuit 9b.

The output from the sensor circuit 8b is input to "the +terminal" of a ope-amp IC7 in the colouring/bleaching state circuit 10, and the output from the sensor circuit 9b, after it has been divided by a resistor R12, a resistor R13 and a variable resistor VR1, is input to "the -terminal" thereof.

The ope-amp IC7 compares these inputs, and outputs "the coloring signal" or "the bleaching signal" to the IM delay circuit 13 or OM delay circuit 12.

The output from the sensor circuit 9b becomes lower as the car ambience becomes brighter: in the "daytime mode", the output is at a low level, while in the "nighttime mode", it is at a high level. The boundary between the "daytime mode" and the "nighttime mode" can be set so that when the ambient brightness is, for instance, below 0.6 Lux, the "nighttime mode" is actuated, while when it is above 0.6 Lux, the "daytime mode" comes.

When the backward light from the headlight, etc. of the following car enters the backward light sensor circuit 8 provided near IM 2, the output voltage from the sensor circuit 8b lowers. Accordingly, the signal output from the sensor circuit 9b and the one from the sensor circuit 8b are reversed in their amplitude relation. This reversed state means the glaring state, and the coloring signal "L" is output from the ope-amp IC7. If there is no incidence of backward light, the output from the ope-amp IC7 becomes "H", i.e. the bleaching signal is output.

The IM delay circuit 13 forms a charge/discharge circuit with a condenser C4 and resistors R19 and R20, while the OM delay circuit 12 forms one with a condenser C3 and resistors R17 and R18. The outputs from these charge/discharge circuits are input to "the -terminals" of ope-amps IC6 and IC16, respectively, and the voltage $V_B$, divided by resistors R8 and R27, is input to "the +terminals" of the ope-amps IC6 and IC16, respectively. To the charge/discharge circuits, "the coloring signal" or "the bleaching signal" output from the colouring/bleaching state circuit 10 is input. The ope-amps IC6 and IC16 change their output contents according to the amplitude of "the -terminal" and "the +terminal".

So, if "the coloring signal" or "the bleaching signal" changes, electric charges enter and exit from the condensers C3 and C4 of the charge/discharge circuits, so "the -terminals" of the ope-amps IC6 and IC16 change in voltage. The condensers' charge/discharge time constant T is $T = k \cdot R \cdot C$ (k: constant), and a certain time is required for the amplitude relation between "the -terminal" and "the +terminal" of the ope-amps IC6 and IC16 to be reversed. Namely the outputs from the ope-amps IC6 and IC16 do not change in their contents even if the signal output from the colouring/bleaching state circuit 10 changes unless this changed signal persists for a certain time period.

Embodiment 2 is set up such that resistor R8 = resistor R27 = 10kΩ, resistor R17 = 310kΩ, resistor R19 = 82kΩ, resistor R18 = 1MΩ, resistor R20 = 620kΩ, and condenser C3 = condenser C4 = 4.7 μF. By this, the following charge/discharge times can be achieved: 1 second for coloring and 2 seconds for bleaching at the OM delay circuit 12, and 0.26 seconds for coloring and 2 seconds for bleaching at the IM delay circuit 13. These values can be designed as the case may be.

The day/night mode deciding circuit 11 has an ope-amp IC27, to "the +terminal" of which is input the output from the sensor circuit 9b, and to "the -terminal" of which is input a fixed standard value. The sensor circuit 9b has the characteristic that the output voltage lowers when the ambient light brightness increases.

Since the voltage input to "the +terminal" of ope-amp IC27 changes according to the ambient brightness, "the daytime mode" or "the nighttime mode" is judged by the comparison between the input voltages to "the +terminal" and "the -terminal". The resulting judgment signal is input to the day/night mode deciding delay circuit 14, where it is first input to a charge/discharge circuit made of a resistor R26 and a condenser C5, the resulting voltage being input to an ope-amp IC26.

Accordingly, the output from the ope-amp IC26 does not change when or unless the signal from the day/night mode deciding circuit 11 persists for a time period longer than the charge/discharge time decided by the resistor R26 and condenser C5. To the coloring/bleaching switching gate circuit 5 are input the signals from: the OM delay circuit 12, the IM delay circuit 13 and the day/night mode deciding delay circuit 14; and logical judgment is done by the IM gate circuit 16 and OM gate circuit 15.

According to Fig. 6, the driving circuit 6 is provided with a select switch for the six circuits/three contact points of the manual AUTO mode, DAY mode and NIGHT mode. If AUTO mode is selected, the anti-glare mirror system automatically judges "glaring conditions" or "unactuated conditions" and makes the IM 2 and OM 1 "colored" or "bleached". If DAY or NIGHT mode is selected, the IM 2 and OM 1 are always kept at "colored" or "bleached" state. The following explanation is done about the case when AUTO mode is selected.

The IM drive timer circuit 18 comprises: inverters 60, 61 and 62; a timer 63 for coloring, a pulse oscillation circuit 64 for maintaining the colored state and output gates 65, 66 for these circuits; a timer 67 for bleaching and an output gate 68 for this circuit.

The OM drive timer circuit 17, like the IM drive timer circuit 18, comprises inverters 70, 71 and 72, a timer 73 for coloring, a pulse oscillation circuit 74 for maintaining the colored state, a timer 75 for bleaching and respective output gates 76, 77 and 78.

The IM drive voltage controlling circuit 21 supplies a control voltage to a ECD (electrochromic device) 2a which is a component of the IM (inside rearview mirror) 2, and the corresponding circuit 20 supplies a control voltage to a ECD 1a which is a component of the OM (outside rearview mirror) 1.

Explanation is hereinafter limited to the operation of IM drive timer circuit 18 and IM driving voltage control circuit 21, since OM and IM drive timer circuits 17 and 18, and also OM and IM driving voltage control circuits 20 and 21 make the basically same operations.

When the input signal to the IM drive timer circuit 18 becomes "L", the ECD of IM 2 is colored, while when it

becomes "H", the ECD of IM 2 is bleached.

Namely, when the input signal to the inverter 60 becomes "L", the output gate 65 of the coloring timer 63 outputs a coloring pulse with a 7-sec pulse width to the IM driving voltage control circuit 21, which applies 1.35V driving voltage to ECD 2a via coloring side transistors for 7 consecutive seconds to color ECD 2a.

The color maintaining pulse oscillation circuit 64 is actuated when the input signal becomes "L", and outputs a pulse with a 0,5-sec width and a 1.2V voltage to the IM driving voltage control circuit 21, for instance, every 5 seconds.

By this, following the coloring pulse output from the coloring timer 63, the color maintaining pulse is output by circuit 64 every 5 seconds to maintain the colored state of ECD 80.

Meanwhile, when the input signal from the inverter 60 becomes "H", the output gate 68 of the bleaching timer 67 outputs the bleaching pulse with a 7-sec pulse width to the IM driving voltage control circuit 21. By this, a driving voltage (-1.2V) with a reversed polarity, as compared to the driving voltage for coloring, is applied to ECD 2a to bleach it.

With the above-mentioned construction, the table of Fig. 7 shows the driving voltage, as well as the coloring and bleaching speeds required, when the reflectivity of IM 2 and OM 1 is set at 70-80% at the bleaching time, and below 10% at the coloring time.

By the way, the embodiment 1 uses the same type of ECDs, while the embodiment 2 uses different types of ECDs. But according to this invention, the electro-optical device is not limited to these ECDs, but also a guest/host (guesthost) (GH) type liquid-phase device may be used.

The guest/host type liquid-phase device employs a mixture of pigment molecules dissolved in the solvent of a nematic liquid crystal. The orientation of pigment molecules changes according to the orientation of the liquid molecules to modulate the absorption of incident light and reflected light.

It is therefore possible to make the IM 2 smaller in reactivity than the OM 1 by making the absorption coefficient of pigment molecules for light of OM 1 lower than that of IM 2.

Also, ECD may be used for OM 1, and LCD (liquid crystal device) including GH type liquid crystal device for IM 2. Better in response compared with ECD, LCD is particularly effective in shifting the mirror system from the unactuated state to the anti-glare conditions, by using LCD for IM 2.

Since ECD changes its reflectivity continuously according to the changes in the driving voltage, it is possible to make the reflectivity of OM 1 at the anti-glare state higher than that of IM 2 by properly setting the driving voltage sizes.

Further, LCD may be used for IM 2, while PLZT which utilizes the electro-optical effect that double refraction rate is controllable in the external field, may be used for OM 1. PLZT can continuously change the reflectivity, making the reflectivity of OM 1 at the anti-glare time greater than that of IM 2 by properly setting the driving voltage.

[Embodiment 3]

In the above explanations, electro-optical devices with different characteristics were used for IM 2 and OM 1 to control their reflectivities.

However the driving voltages of IM 2 and OM 1 may be adjusted instead, by adding a transforming circuit for changing the output voltage to the driving circuit 6 shown in Fig. 6.

Namely, the driving voltage is divided via resistors by adding conversion circuits 80 and 81 to the OM and IM driving voltage control circuits 20 and 21 respectively, as shown in Fig. 8.

The transforming circuit 80 consists of a pair of a resistor R83 and a variable resistor VR2, or of a resistor R84 and a variable resistor VR3, and the transforming circuit 81 consists of a pair of a resistor R85 and a variable resistor VR4, or of a resistor R86 and a variable resistor VR5.

The voltage supplied to the electro-optical devices 1b and 2b of OM 1 and IM 2 can be adjusted by adjusting the variable resistors VR2, VR3, VR4 and VR5.

As the electro-optical device, of course, the liquid-phase ECD may be used for IM and the solid-state ECD for OM, as mentioned in the section of the embodiment 2.

## Claims

1. An anti-glare mirror system, comprising electro-optical devices which are applied to inside and outside rearview mirrors (2,1) of an automobile in order to change the reflectivity of these mirrors, and a driving circuit (6) which drives said electro-optical devices and is arranged to make the reflectivity different in case of colouring said inside and said outside rearview mirrors (2,1), characterized in that said driving circuit (6) is provided with timer circuits (12,13,17,18) which are set up to make the timing to start the colouring drive voltage supplied to said inside rearview mirror(s) (2) earlier than the-timing to start the colouring drive voltage supplied to said outside rearview mirror(s) (1), and make the timing to start applying the bleaching drive voltage supplied to said inside rearview mirror(s) later than the timing to start applying the bleaching drive voltage supplied to said outside rearview mirror(s).

2. The anti-glare mirror system according to claim 1, characterized by a sensing circuit (4) which detects the ambient and backward lights, compares them with a standard value and judges whether the reflectivity of said inside and said outside rearview mirrors (2,1) should be changed by said driving circuit (6), a coloring/bleaching switch gate circuit (5) which judges whether the judgment by said sensing circuit (4) is temporary or not, and the driving circuit (6) which drives said electro-optical devices (2a,1a) by the signal from said coloring/bleaching switch gate circuit (5).

3. The anti-glare mirror system according to claim 1 or 2, characterized in that said electro-optical devices are made from any one or two kinds of materials selected from among electrochromic device, liquid crystal device and PLZT.

4. The anti-glare mirror system according to claim 1 or 2, characterized in that said electro-optical devices are electrochromic devices.

5. The anti-glare mirror system according to claim 4, characterized in that the electro-optical device used for said inside rearview mirror(s) (2) is a liquid-phase electrochromic device, and the electro-optical device used for said outside rearview mirror(s) (1) is a solid-state electrochromic device, and said driving circuit (6) outputs the same driving voltage to make the reflectivity in case of colouring the inside rearview mirror(s) smaller than the reflectivity in case of colouring the outside rearview mirror(s).

6. The anti-glare mirror system according to any of claims 1 to 4, characterized in that said driving circuit (6) has a transforming circuit (20,22,21,23) which changes the driving voltage supplied to said inside and said outside rearview mirrors (2,1) to make the driving voltage supplied to said inside rearview mirror(s) (2) higher than the driving voltage supplied to the outside rearview mirror(s) (1), so as to cause the reflectivity in case of colouring said inside rearview mirror(s) to be smaller than the reflectivity in case of colouring said outside rearview mirror(s).

7. The anti-glare mirror system according to any of claims 1 to 6, characterized in that said driving circuit (6) detects the terminal voltages at said inside and said outside rearview mirrors (2,1), and a terminal voltage sensing and controlling circuit (20,22,21,23) is provided to compare the detected voltages with a respective adjustable standard voltage (V1,V2) so that fixed driving voltages can be supplied to each of said inside and said outside rearview mirrors.

**Patentansprüche**

1. Blendfreies Spiegelsystem mit elektrooptischen Vorrichtungen, die an Innen- und Außenrückspiegeln (2,1) eines Kraftfahrzeugs verwendet werden, um das Reflexionsvermögen dieser Spiegel zu ändern, und einer Treiberschaltung (6), die die elektrooptischen Vorrichtungen treibt und dazu ausgebildet ist, das Reflexionsvermögen im Fall einer Abdunkelung des Innenrückspiegels und des Außenrückspiegels (2,1) zu ändern, dadurch gekennzeichnet, dass die Treiberschaltung (6) mit Zeitsteuerschaltungen (12, 13, 17, 18) versehen ist, die dazu eingerichtet sind, die Zeitgebung zum Starten der an den oder die Innenrückspiegel (2) gelieferten abdunkelnden Treiberspannung früher zu machen als die Zeitgebung zum Starten der an den bder die Außenrückspiegel (1) gelieferten abdunkelnden Treiberspannung, und die Zeitgebung zum Starten des Anlegens der an den oder die Innenrückspiegel gelieferten aufhellenden Treiberspannung später zu machen als die Zeitgebung zum Starten des Anlegens der an den oder die Außenrückspiegel gelieferten aufhellenden Treiberspannung.

2. Das blendfreie Spiegelsystem nach Anspruch 1, gekennzeichnet durch: eine Sensorschaltung (4), die das Umgebungslicht und das Licht von hinten feststellt, sie mit einem Standardwert vergleicht und beurteilt, ob das Reflexionsvermögen des Innenrückspiegels (2) und des Außenrückspiegels (1) durch die Treiberschaltung (6) verändert werden soll; eine abdunkelnde/aufhellende Schalttorschaltung (5), die beurteilt, ob die Beurteilung durch die Sensorschaltung (4) vorübergehend ist oder nicht; und die Treiberschaltung (6), die die elektrooptischen Vorrichtungen (2a,1a) durch das Signal von der abdunkelnden/aufhellenden Schalttorschaltung (5) treibt.

3. Das blendfreie Spiegelsystem nach Anspruch 1 oder 2, dadurch gekennzeichnet, dass die elektrooptischen Vorrichtungen aus einem oder zweien der folgenden Materialien hergestellt sind: elektrochromes Bauteil, Flüssigkristallbauteil und PLZT.

4. Das blendfreie Spiegelsystem nach Anspruch 1 oder 2, dadurch gekennzeichnet, dass die elektrooptischen Vorrichtungen elektrochrome Bauteile sind.

5. Das blendfreie Spiegelsystem nach Anspruch 4, dadurch gekennzeichnet, dass die elektrooptische Vorrichtung,

die für den oder die Innenrückspiegel (2) verwendet wird, ein flüssigphasen-elektrochromes Bauteil ist und die elektrooptische Vorrichtung, die für den oder die Außenrückspiegel (1) verwendet wird, ein feststoff-elektrochromes Bauteil ist, und dass die Treiberschaltung (6) die gleiche Treiberspannung abgibt, um das Reflexionsvermögen im Fall des Abdunkelns der oder des Innenrückspiegels kleiner zu machen als das Reflexionsvermögen im Fall des Abdunkelns der oder des Außenrückspiegels.

6. Das blendfreie Spiegelsystem nach einem der Ansprüche 1 bis 4, dadurch gekennzeichnet, dass die Treiberschaltung (6) eine transformierende Schaltung (20, 22, 21, 23) hat, die die an den Innenrückspiegel (2) und an den Außenrückspiegel (1) gelieferte Treiberspannung ändert, um die an den oder die Innenrückspiegel (2) gelieferte Treiberspannung höher zu machen als die an den oder die Außenrückspiegel (1) gelieferte Spannung, um so zu bewirken, dass das Reflexionsvermögen im Falle des Abdunkelns des oder der Innenrückspiegel niedriger ist als das Reflexionsvermögen im Fall des Abdunkelns des oder der Außenrückspiegel (s).

7. Blendfreies Spiegelsystem nach einem der Ansprüche 1 bis 6, dadurch gekennzeichnet, dass die Treiberschaltung (6) die Klemmenspannungen an den Innen- und Außenrückspiegeln (2,1) feststellt und eine Klemmenspannung-Sensor- und Steuerschaltung (20, 22, 21, 23) vorhanden ist zum Vergleichen der festgestellten Spannungen mit einer jeweiligen justierbaren Standardspannung (V1, V2) so, dass feste Treiberspannungen an jeden der Innen- und Außenrückspiegel geliefert werden können.

## Revendications

1. Système de miroirs antiéblouissants comprenant des dispositifs électro-optiques qui sont appliqués aux rétroviseurs intérieur et extérieur (2, 1) d'une automobile pour modifier le coefficient de réflexion de ces miroirs, et un circuit de commande (6) qui commande lesdits dispositifs électro-optiques et est agencé de manière à rendre le coefficient de réflexion différent dans le cas d'une coloration desdits rétroviseurs intérieur et extérieur (2, 1), caractérisé en ce que ledit circuit de commande (6) est équipé de circuits de minuterie (12, 13, 17, 18), qui sont réglés de manière à régler l'instant pour le démarrage de la tension de commande de coloration appliquée aux(x)dit(s) rétroviseur(s) intérieur(s) (2) pour qu'il se situe avant l'instant de démarrage de l'application de la tension de commande de coloration appliquée aux(x)dit(s) rétroviseur(s) extérieur(s) (1) et régler l'instant de démarrage de l'application de la tension de commande de décoloration aux(x)dit(s) rétroviseur(s) intérieur(s) pour qu'il se situe après l'instant de démarrage de l'application de la tension de commande de décoloration appliquée au(x)dit(s) rétroviseur(s) extérieur(s).

2. Système de miroirs antiéblouissants selon la revendication 1, caractérisé par un circuit de détection (4), qui détecte la lumière ambiante et de la lumière arrière, les compare à une valeur standard et évalue si le coefficient de réflexion desdits rétroviseurs intérieur et extérieur (2,1) doit être modifié par ledit circuit de commande (6), un circuit (5) de commande de commutation coloration/décoloration, qui évalue si l'évaluation faite par ledit circuit de détection (4) est temporaire ou non, et le circuit de commande (6), qui commande lesdits dispositif électro-optiques (2a, 1a) au moyen du signal délivré par ledit circuit (5) de commande de coloration/décoloration.

3. Système de miroirs antiéblouissants selon la revendication 1 ou 2, caractérisé en ce que lesdits dispositifs électro-optiques sont formés d 'un ou de deux types de matériaux sélectionnés parmi un dispositif à effet d'électrochrome, un dispositif à cristal liquide et du PLZT.

4. Système de miroirs antiéblouissants selon la revendication 1 ou 2, caractérisé en ce que lesdits dispositifs électro-optiques sont des dispositifs à effet d'électrochrome.

5. Système de miroirs antiéblouissants selon la revendication 4, caractérisé en ce que le dispositif électro-optique utilisé pour le ou lesdits rétroviseurs intérieurs (2) est un dispositif à effet d'électrochrome à phase liquide, que le dispositif électro-optique utilisé pour le ou lesdits rétroviseurs extérieurs (1) est un dispositif à effet d'électrochrome à l'état solide, et que ledit circuit de commande (6) envoie la même tension de commande pour rendre le coefficient de réflexion dans le cas de la coloration du ou des rétroviseurs intérieurs, inférieur au coefficient de réflexion dans le cas de la coloration du ou des rétroviseurs extérieurs.

6. Système de miroirs antiéblouissants selon l'une quelconque des revendications 1 à 4, caractérisé en ce que ledit circuit de commande (6) possède un circuit de transformation (20, 22, 21, 23) qui modifie la tension de commande appliquée auxdits rétroviseurs intérieur et extérieur (2, 1) pour rendre la tension de commande appliquée au(x)dit(s) rétroviseur(s) intérieur(s) (2) supérieure à la tension de commande appliquée au(x) rétroviseur(s) extérieur(s) (1), de manière à rendre le coefficient de réflexion dans le cas de la coloration du ou desdits rétroviseurs

intérieurs, inférieur au coefficient de réflexion dans le cas de la coloration du ou desdits rétroviseurs extérieurs.

7. Système de miroirs antiéblouissants selon l'une quelconque des revendications 1 à 6, caractérisé en ce que ledit circuit de commande (6) détecte les tensions aux bornes dans lesdits rétroviseurs intérieur et extérieur (2, 1), et qu'il est prévu un circuit (20, 22, 21, 23) de détection et de commande de la tension aux bornes pour comparer les tensions détectées à une tension standard respective réglable (V1, V2) de sorte que des tensions de commande fixées peuvent être appliquées à chacun desdits rétroviseurs intérieur et extérieur.

FIG. 1

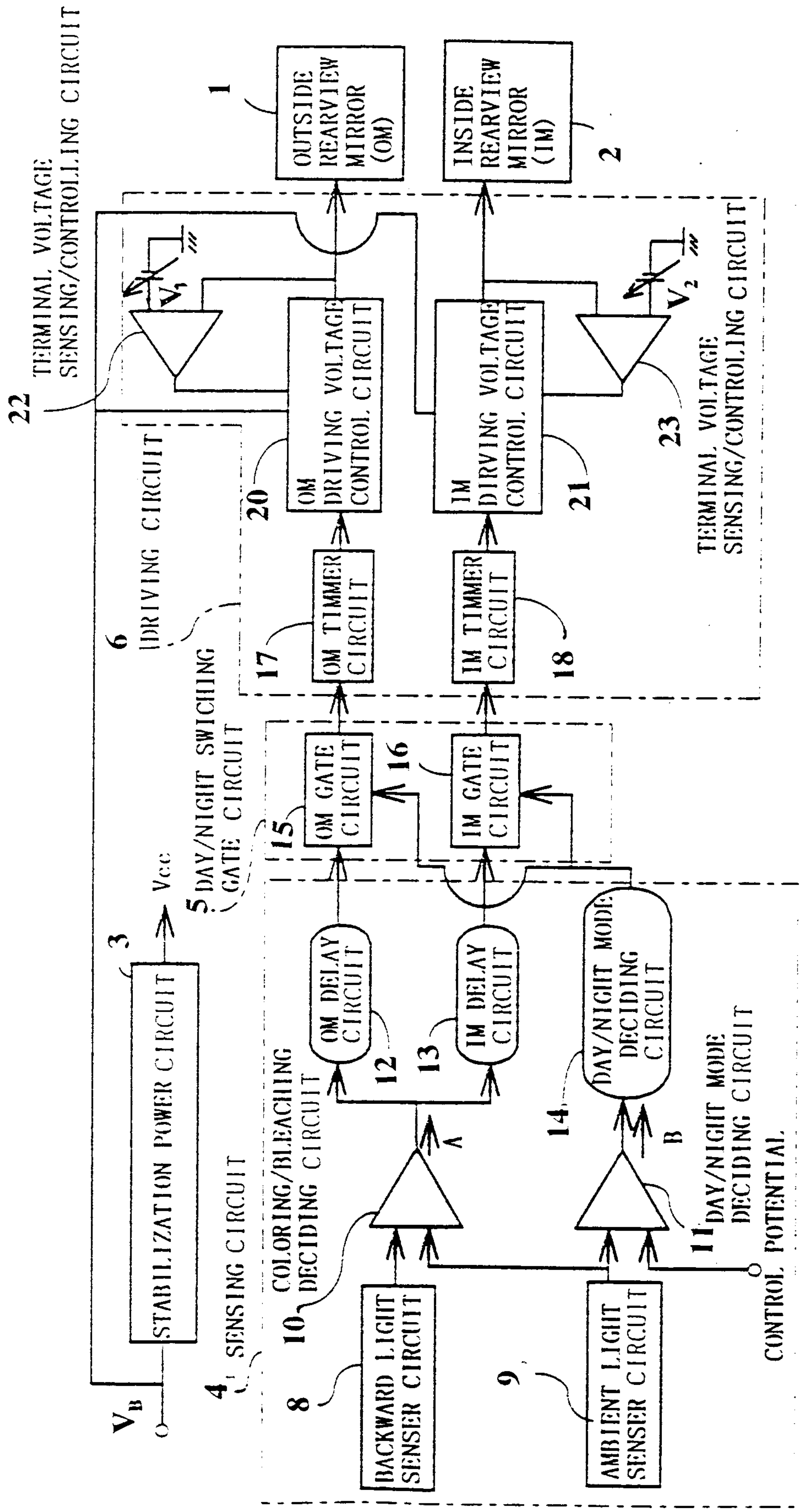
TERMINAL VOLTAGE SENSING/CONTROLLING CIRCUIT
22
1
OUTSIDE REARVIEW MIRROR (OM)
INSIDE REARVIEW MIRROR (IM)
2
V1
V2
OM DRIVING VOLTAGE CONTROL CIRCUIT
IM DIRVING VOLTAGE CONTROL CIRCUIT
20
21
23
TERMINAL VOLTAGE SENSING/CONTROLLING CIRCUIT
6 DRIVING CIRCUIT
17
OM TIMMER CIRCUIT
IM TIMMER CIRCUIT
18
5 DAY/NIGHT SWICHING GATE CIRCUIT
15
OM GATE CIRCUIT
16
IM GATE CIRCUIT
3
Vcc
STABILIZATION POWER CIRCUIT
OM DELAY CIRCUIT
IM DELAY CIRCUIT
12
13
DAY/NIGHT MODE DECIDING CIRCUIT
14
A
B
10 COLORING/BLEACHING DECIDING CIRCUIT
11 DAY/NIGHT MODE DECIDING CIRCUIT
4 SENSING CIRCUIT
VB
8
BACKWARD LIGHT SENSER CIRCUIT
9
AMBIENT LIGHT SENSER CIRCUIT
CONTROL POTENTIAL

FIG. 2

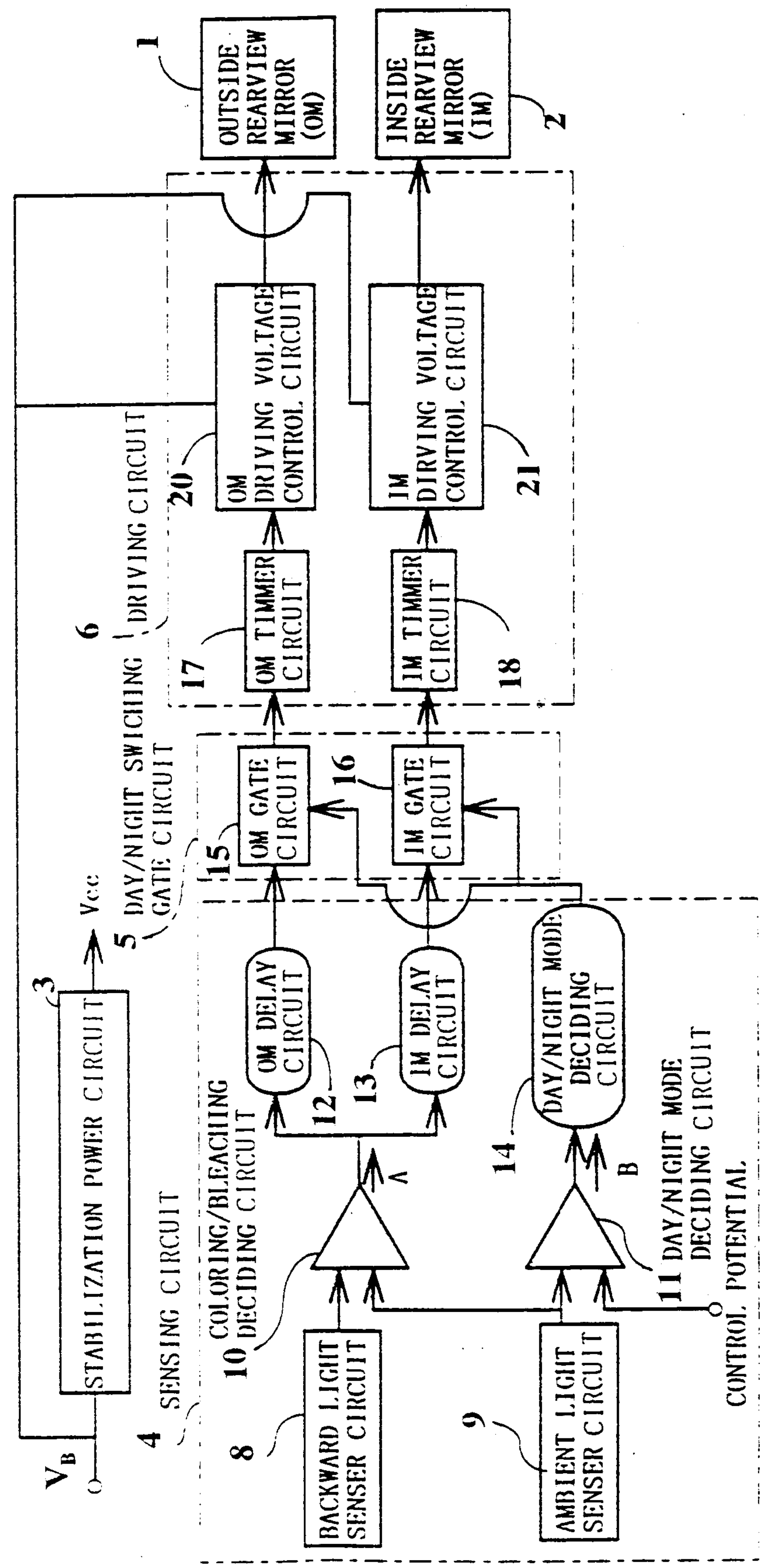

1
OUTSIDE REARVIEW MIRROR (OM)
2
INSIDE REARVIEW MIRROR (IM)
$V_B$
3
STABILIZATION POWER CIRCUIT
Vcc
4 SENSING CIRCUIT
5 DAY/NIGHT SWICHING GATE CIRCUIT
6 DRIVING CIRCUIT
8
BACKWARD LIGHT SENSER CIRCUIT
9
AMBIENT LIGHT SENSER CIRCUIT
10 COLORING/BLEACHING DECIDING CIRCUIT
11 DAY/NIGHT MODE DECIDING CIRCUIT
CONTROL POTENTIAL
A
B
12
OM DELAY CIRCUIT
13
IM DELAY CIRCUIT
14
DAY/NIGHT MODE DECIDING CIRCUIT
15
OM GATE CIRCUIT
16
IM GATE CIRCUIT
17
OM TIMMER CIRCUIT
18
IM TIMMER CIRCUIT
20
OM DRIVING VOLTAGE CONTROL CIRCUIT
21
IM DIRVING VOLTAGE CONTROL CIRCUIT

FIG.3A

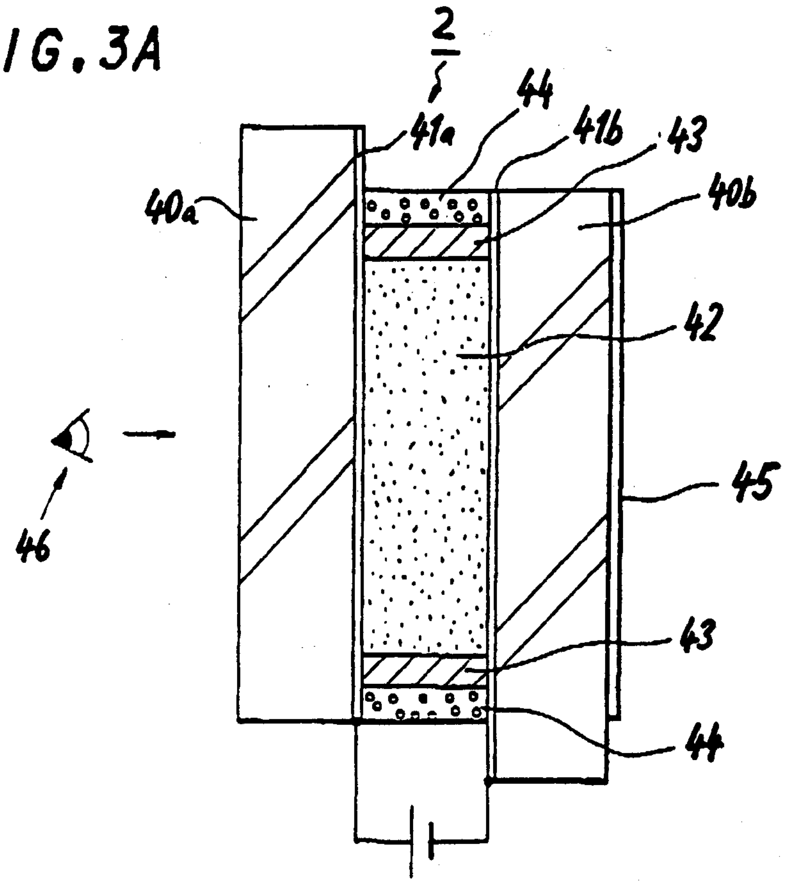


FIG.3B

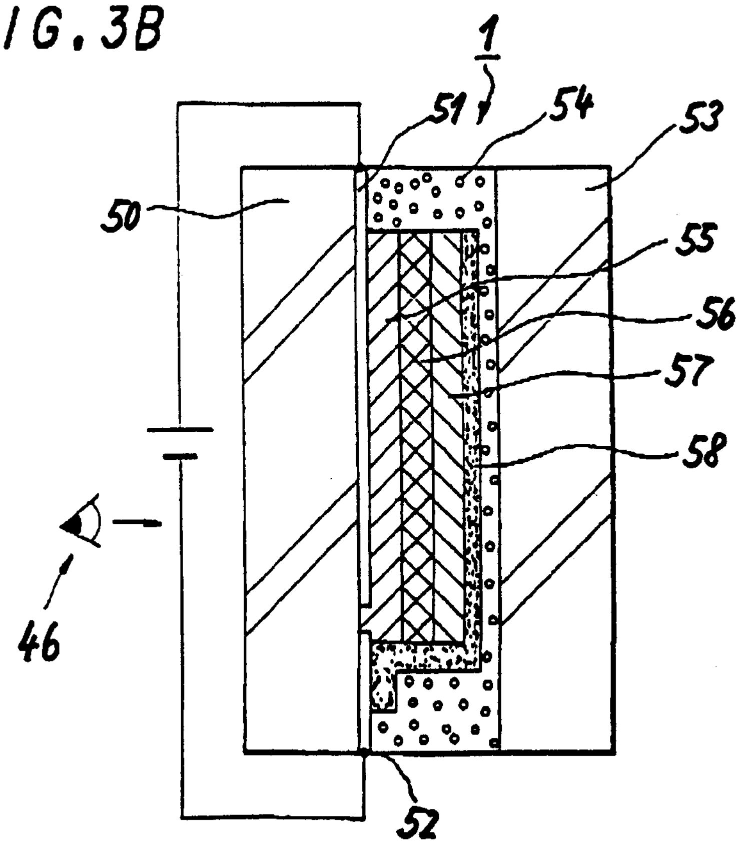

FIG.4

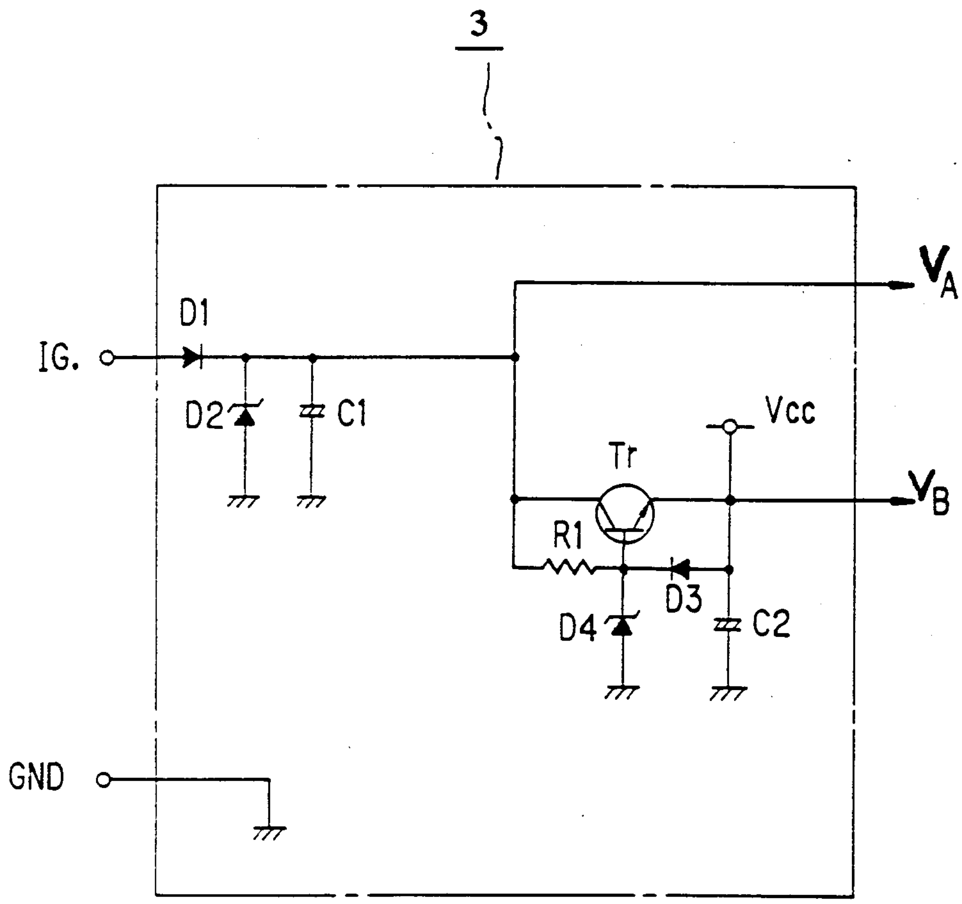

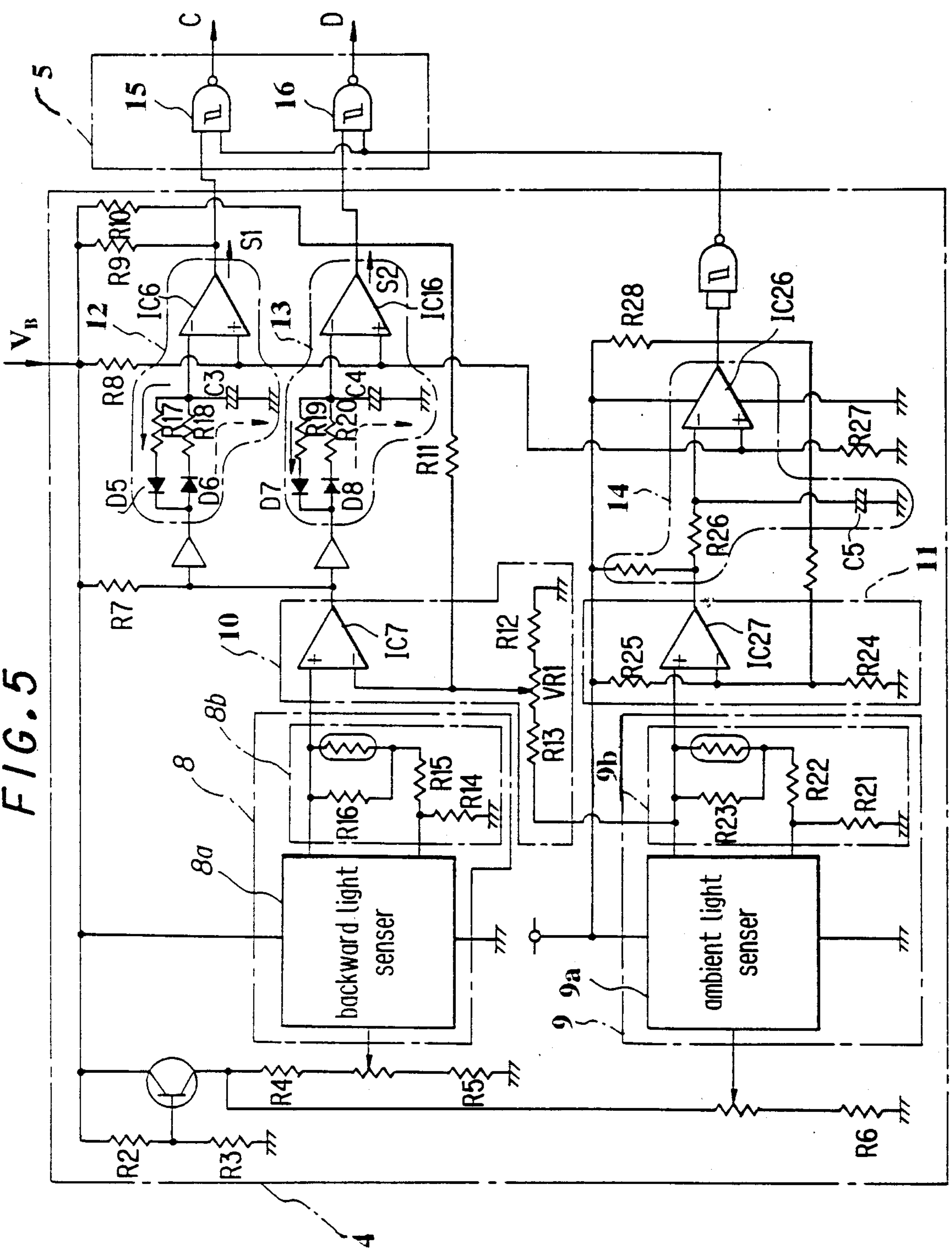
C
D
5
15
16
VB
12
13
S1
S2
IC6
IC16
R8
R9
R10
R17
R18
R19
R20
C3
C4
D5
D6
D7
D8
R7
R11
10
IC7
R12
VR1
R13
8
8a
8b
R14
R15
R16
backward light senser
R2
R3
R4
R5
R6
4
9
9a
9b
ambient light senser
R21
R22
R23
11
IC27
R24
R25
R26
C5
14
R27
R28
IC26

FIG. 5

FIG.6

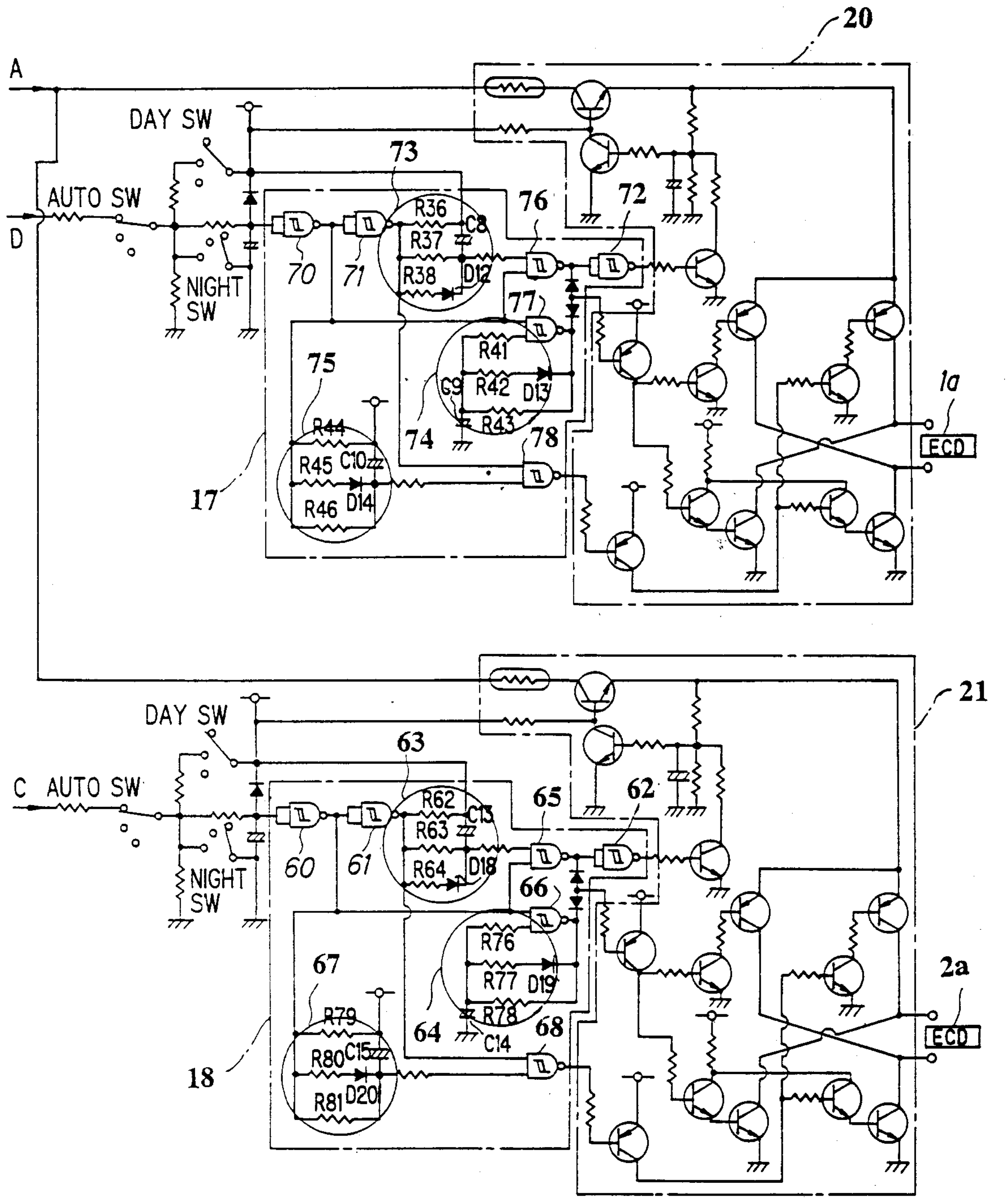
20
A
D
DAY SW
AUTO SW
NIGHT SW
73
76
72
R36
R37
R38
C8
D12
70
71
77
R41
R42
D13
C9
R43
74
75
R44
R45
C10
R46
D14
78
17
1a
ECD
21
C
63
65
62
R62
R63
R64
C13
D18
60
61
66
R76
R77
D19
R78
C14
64
67
R79
R80
C15
R81
D20
68
18
2a

FIG.7

| | reflectance | | coloring | | bleaching | |
|---|---|---|---|---|---|---|
| | coloring (%) | bleaching (%) | driving voltage (V) | coloring velocity (sec) | driving voltage (V) | bleaching velocity (sec) |
| liquid phase ECD | <10 | 70~80 | 0.8 ~1.3 | 3 ~5 | short circuit | 10~15 |
| solid state ECD | <10 | 70~80 | 1.0 ~2.0 | 1 ~3 | -1.0~-2.0 | 2~7 |

FIG. 8

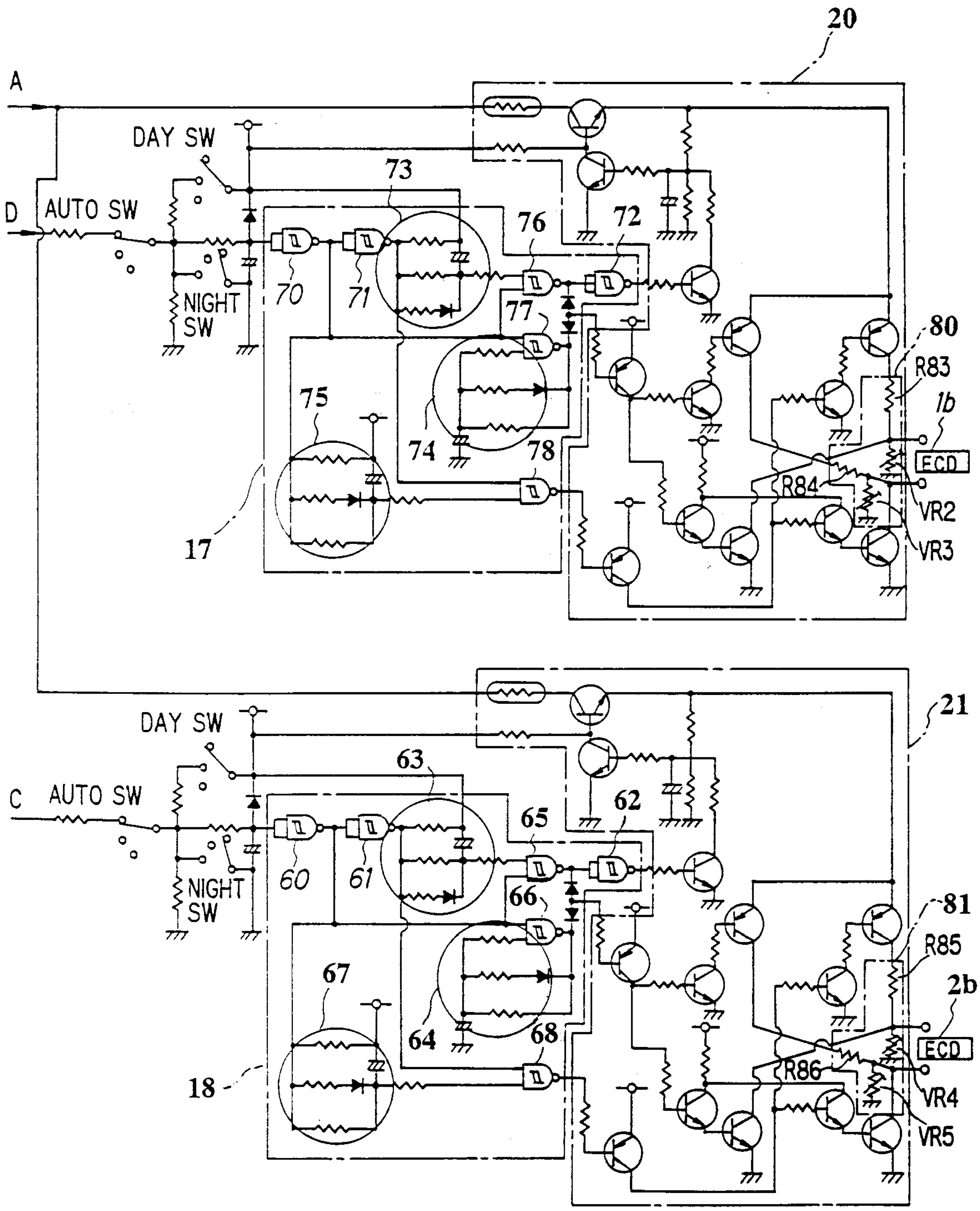
20
A
DAY SW
73
D
AUTO SW
76
72
NIGHT SW
70
71
77
80
R83
1b
75
74
78
ECD
R84
VR2
17
VR3
21
DAY SW
63
C
AUTO SW
65
62
NIGHT SW
60
61
66
81
R85
67
2b
64
68
ECD
18
R86
VR4
VR5